Europäisches Patentamt

European Patent Office

Office européen des brevets

(19)

(11) Publication number: **0 095 281**
**B1**

# EUROPEAN PATENT SPECIFICATION

(12)

(45) Date of publication of patent specification: **20.08.86**

(51) Int. Cl.⁴: **G 02 B 6/38**, G 02 B 6/32

(21) Application number: **83302655.2**

(22) Date of filing: **10.05.83**

(54) Connector for fiber optic member.

(30) Priority: **24.05.82 US 381495**

(43) Date of publication of application:
**30.11.83 Bulletin 83/48**

(45) Publication of the grant of the patent:
**20.08.86 Bulletin 86/34**

(84) Designated Contracting States:
**AT BE CH DE FR GB IT LI NL SE**

(56) References cited:
**EP-A-0 011 011**
**EP-A-0 011 561**
**EP-A-0 014 960**
**EP-A-0 048 561**
**DE-A-2 943 180**
**FR-A-2 372 443**
**US-A-3 989 567**

**26th ELECTRONIC COMPONENTS**
**CONFERENCE, 26th-28th April 1976, pages**
**244-249, San Francisco, USA, T. BOWEN:**
**"Terminating fiber optic bundles"**

(73) Proprietor: **AMP INCORPORATED**
**P.O. Box 3608 449 Eisenhower Boulevard**
**Harrisburg Pennsylvania 17105 (US)**

(72) Inventor: **Ashman, John Jay**
**3229 North Second Street**
**Harrisburg Pennsylvania 17110 (US)**
Inventor: **Caron, Bernard George**
**4330 Winthrop Drive**
**Harrisburg Pennsylvania 17112 (US)**

(74) Representative: **Gray, Robin Oliver et al**
**BARON & WARREN 18 South End Kensington**
**London W8 5BU (GB)**

(56) References cited:
**INSTRUMENTS & CONTROL SYSTEMS, vol.**
**53, no. 5, May 1980, pages 49-50, Radnor PA,**
**USA, T. BOWEN et al.: "Reducing fiber optic**
**connector problems"**

**ELECTRONICS LETTERS, vol. 17, no. 7, 2nd**
**April 1981, pages 268-270, London, G.B., S.**
**NAGASAWA et al.: "Optical fibre connectors**
**using a fused and drawn multi-glass-rod**
**arrangement"**

Courier Press, Leamington Spa, England.

(56) References cited:
APPLIED OPTICS, vol. 15, no. 11, November 1976, pages 2785-2791, New York, USA, f.L. THIEL et al.: "Optical waveguide cable connection"

IEEE TRANSACTIONS ON COMMUNICATIONS, vol. COM-26, no. 7, July 1978, pages 1068-1076, New York, USA, D.C. HANSON et al.: "Integrated transducer modules, connectors and cable for industrial fiber optic data links"

## Description

This invention relates to a connector of a fiber optic member and to a method of terminating a fiber optic member.

U.S. Patent 3,999,837 discloses a connector for a fiber optic member which includes a ferrule in which the fiber optic member and protective jacket thereon is disposed with an exposed end of the fiber optic member extending along a front bore. Potting material is applied onto the exposed fiber optic member before or after the fiber optic member is inserted into the ferrule. The potting material begins to cure thereby partly retaining the fiber optic member in the ferrule while the crimping ring is crimped onto the ferrule which holds the parts in place while the potting material fully cures.

The use of potting material secures the fiber optic member in the ferrule, but it is messy, it is an extra step, and it takes time to cure. This is undesirable when terminations of fiber optic members need to be done at remote locations in the field and they need to be done quickly and easily.

An insert being positioned onto the buffer material covering the fiber optic member is known. The insert is placed in a ferrule and crimping ferrule is crimped onto the ferrule which causes the insert to be reduced in diameter thereby secured onto the buffer material. This approach was effective for the buffer material in use at the time. The buffer material in current use is too soft and dose not have the characteristics to enable an insert to be crimped thereon to terminate an end of a fiber optic member effectively.

It is known from DE—A—2 943 180 to provide a connector for terminating a fiber optic connector of a fiber optic cable, and which comprises a ferrule member having a front section and a rear section, said front and rear sections having a profiled bore extending therethrough, and insert having a profiled bore for extension therethrough of the fiber optic member and disposed within the profiled bore of the rear section of the ferrule member, and a crimping ferrule disposed along the rear section of the ferrule member.

It is an object to provide an improved connector and method of terminating a connector onto a fiber optic member.

According to the present invention, a connector for terminating a fiber optic member of a fiber optic cable of the type comprising a ferrule member having a front portion and a rear portion, said front and rear portions having a profiled bore extending therethrough, an insert having a profiled bore for extension therethrough of the fiber optic member said inser being disposed within the profiled bore of the rear portion of ferrule member, and a crimping ferrule disposed along rear section of ferrule member is characterised in that said insert has a cylindrical portion and said profiled bore is in the form of a rod-receiving bore through said cylindrical section, that at least three discrete rod members of circular cross-section are disposed in said rod-receiving bore and are relatively positioned and held therein to enable fiber optic member to be inserted therealong with an end of the fiber optic member being positioned in said bore adjacent a front surface of said front section of said ferrule member; and that said crimping ferrule is arranged and adapted to be controllably crimped onto said rear section of ferrule member thereby inwardly to deform said rear section and said insert and move the rod members into engagement with the fiber optic member.

According to another aspect of the present invention, a method of terminating a connector onto an end of fiber optic cable is characterised by the steps of placing an insert member having discrete rod members therein onto a fiber optic member of the fiber optic cable adjacent the end of the fiber optic member with the end of the fiber optic member extending outwardly therefrom; inserting said insert member with the fiber optic member therein into a bore of a ferrule member said insert member being disposed in a rear portion of the ferrule member and with the end of the fiber optic member disposed in a front portion of said bore; and controllably crimping a crimping ferrule on said rear portion of said ferrule member thereby reducing said rear portion and said insert member and moving the rod members of said insert member into engagement with the fiber optic member which secures the fiber optic member in said insert member and secures said insert member in sajd ferrule member.

In DE—A—2 943 180 the insert comprises a sleeve and a collet member having a plurality of finger-like jaws extending from an annular collar and arranged for axial engagement with a sleeve. Radially outer surfaces of the collet member taper axially so that relative axial movement of the collet member and sleeve during assembly about a fiber optic member effects clamping engagement of the finger-like jaws with the fiber optic member by a wedging engagement of the collet member within the sleeve. In one embodiment the collet member is urged axially into the sleeve after passage of the fiber optic member and in another embodiment the sleeve is urged axially about the collet member.

The invention will now be described, by way of example, with reference to the accompanying drawings, in which:-

Figure 1 is a perspective exploded view of the connector and the fiber optic cable,

Figure 2 is a view of Figure 1 showing the connector fully crimped onto the fiber optic cable,

Figure 3 is a view similar to Figure 2 showing the end of the fiber optic member being removed,

Figure 4 is a view similar to Figure 3 showing a compressing and polishing fixture exploded therefrom,

Figure 5 is a perspective view showing the polishing of the end of the fiber optic member,

Figure 6 is a cross-sectional view of a splice connector for fiber optic cables using the connector of the present invention,

Figure 7 is a cross-sectional view taken along line 7—7 of Figure 6,

Figure 8 is a cross-sectional view along the crimped area of the connector showing the engagement of the rods onto a section of the exposed fiber optic member.

Figure 9 is a view similar to that of Figure 8 showing an alternative embodiment,

Figure 10 is a part cross-sectional view similar to that of Figure 8 showing a further embodiment,

Figure 11 is a view taken along line 11—11 of Figure 10 prior to crimping.

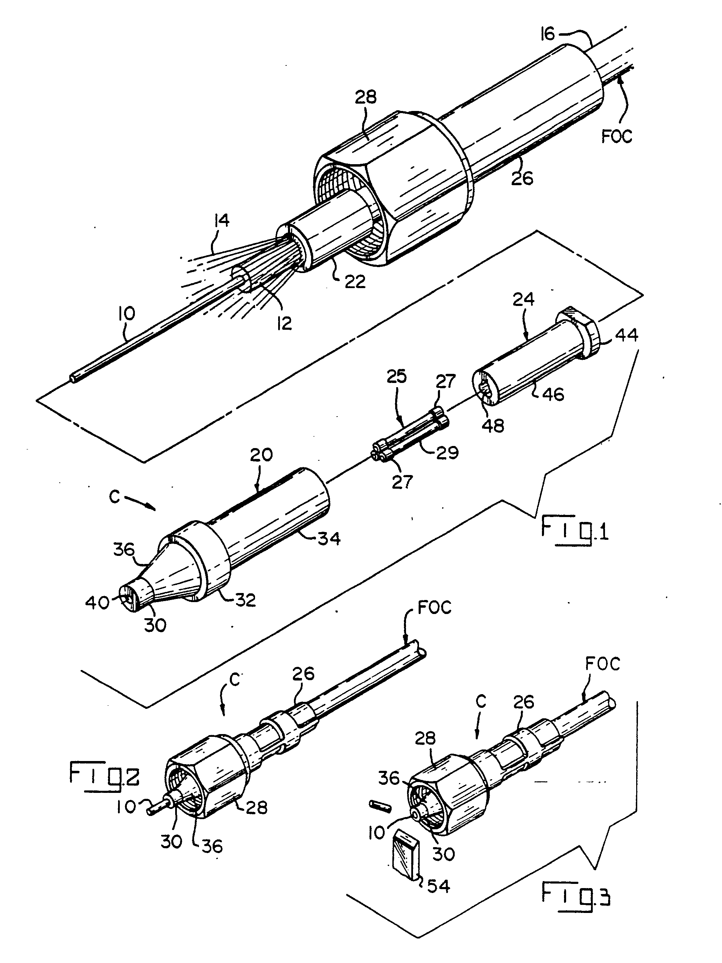

Figures 1 through 8 illustrate a connector C for terminating a fiber optic cable FOC. The fiber optic cable FOC includes a fiber optic member 10 which includes a core or light-transmitting member surrounded by cladding material to enable light to be transmitted therealong. An inner jacket 12 of plastic material surrounds a buffer material which covers fiber optic member 10 and lends strength to the cable to prevent the core or light-transmitting member from being broken since it can be made from glass of plastic material. Strength members 14 of plastic material or metal extend along inner jacket 12 to lend further strength to the cable and provide tensile strength thereto. An outer jacket 16 protects the entire cable assembly. The fiber optic cable FOC is stripped as illustrated in Figure 1 to expose a length of strength members 14, inner jacket 12, and fiber optic member 10 to enable the stripped fiber optic cable to be terminated onto connector C.

Connector C includes a ferrule member 20, a metal ring 22, an insert 24, rods 25, and a crimping ferrule 26 on which is captured a threaded nut 28.

Ferrule member 20 is made from a suitable plastic material having resilient characteristics and preferably fabricated by molding. Ferrule member 20 is of the type disclosed in U.S. Patent No. 3,999,837, the disclosure of which is completely incorporated herein by reference. It has a front cylindrical section 30, a central cylindrical section 32, and a rear cylindrical section 34, each of the cylindrical sections having a different diameter as can be discerned. A conical section 36 extends between sections 30 and 32. A rear bore 38 extends through section 34. A front bore 40 extends through front cylindrical section 30 and has a diameter to receive fiber optic member 10 therethrough, whereas rear bore 38 has a diameter to receive insert 24 therein. Conical section 36 has a conical bore 42 extending between bores 38 and 40.

Insert 24 is molded from a suitable plastic material and includes a flange 44 and a cylindrical section 46. A bore 48 having a trifoliate configuration extending through insert 24 to circular bore 50 having a beveled entrance to accommodate fiber optic transmission member 10 of the fiber optic cable FOC. The axes of the trifoliate sections of bore 48 are located at 120° intervals and they respectively receive therein rods 25.

Rods 25 as shown by Figures 1, 6 and 8 are dumbell shaped so that ends 27 engage one another when rods 25 are inserted into the respective trifoliate sections of bore 48 thereby maintaining circular sections 29 spaced from one another parallel to the axis of bore 48 to enable fiber optic member 10 to be threaded therethrough. The ends of ends 27 are tapered to facilitate insertion of rods 25 within the trifoliate sections as well as to facilitate passage of fiber optic member 10 therealong. Rods 25 are press fit into the trifoliate sections of bore 48 so that ends 27 frictionally maintain rods 25 within the trifoliate sections. Rods 25 are used for fiber optic members having diameters of 124 to 140 microns.

The triangular-shaped opening formed by the engagement of ends 27 when rods 25 are in position in the trifoliate sections of bore 48 is large enough to enable fiber optic member 10 to pass through rods 25 prior to being crimped onto fiber optic member 10. For larger diameter fiber optic members, rods 25A, as shown in Figure 10, have the same diameter therealong with the ends tapered for the reasons that ends 27 are tapered. Rods 25A, as showm in Figure 11, are frictionally held in position in the trifoliate sections of bore 48A in laterally spaced relation prior to being crimped onto fiber optic member 10 to enable the fiber optic member to move freely therealong. Rods 25 and 25A are formed of a material softer than that of fiber optic member 10.

To terminate fiber optic cable FOC by a connector C, the fiber optic cable is stripped as illustrated in Figure 1 to expose strength members 14, inner jacket 12, and fiber optic member 10.

Connector C is in an assembled condition with a commercially-available moisture resistant and protective resin 52 in the conical bore 42 and part of bore 38 of ferrule member 20; insert 24 with rods 25 or 25A in position in the trifoliate sections of bore 48 is in bore 38 with flange 44 engaging the end of ferrule member 20; and crimping ferrule 26 with threaded nut 28 thereon is positioned on section 34 with the flared section disposed adjacent section 32 of ferrule member 20.

Connector C in its assembled condition is ready to be positioned on the stripped end of the fiber optic cable and to be terminated thereon according to the following procedure. Resin 52 is viscous over a wide temperature range; thus it will not run out of the ferrule member. Resin 52 protects the fiber optic member 10 from moisture and from becoming brittle.

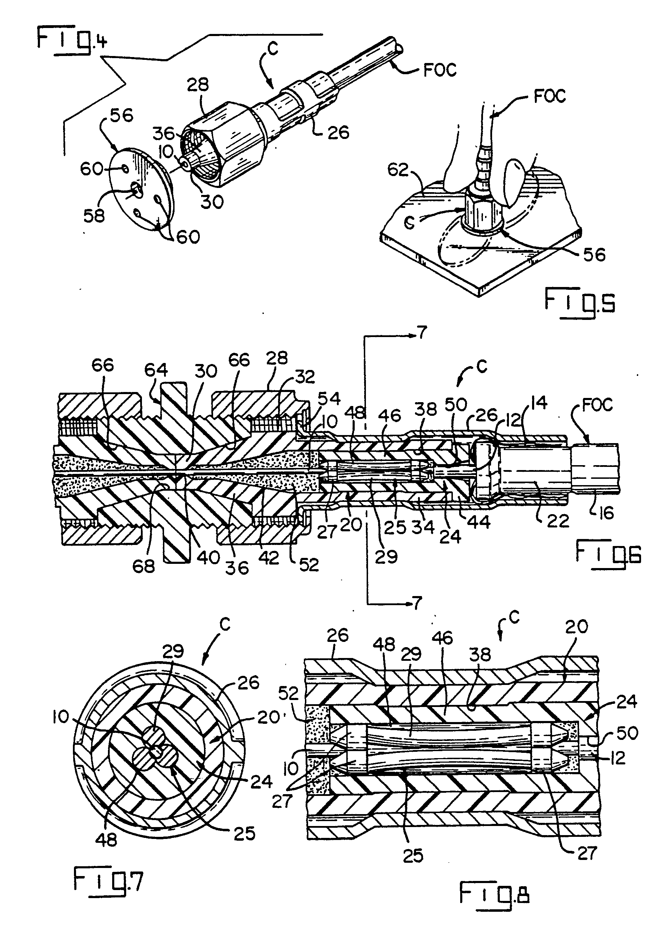

Metal ring 22 is placed on the end of outer jacket 16, the stripped end of fiber optic cable FOC is inserted into the assembled connector C with fiber optic member 10 extending through the triangular-shaped opening of rods 25, 25A, resin 52, bore 40 with an end of fiber optic member 10 extending beyond the end of section 30 as shown in Figure 2. Strength members 16 fold back over metal ring 22.

A conventional crimping tool (not shown) is positioned onto crimping ferrule 26 over metal ring 22 and the crimping tool is controllably operated to crimp this section of crimping ferrule 26 onto strength members 14 and metal ring 22. This reduces metal ring 22 causing it to be crimped onto outer jacket 16 and strength members 14 are captured between metal ring 22 and crimping ferrule 26. This provides a strain relief for the termination.

The crimping tool is next pleced on crimping ferrule 26 over the rods and controllably operated to crimp crimping ferrule 26 onto section 34 of ferrule member 20 and move the rods into engagement with the section of fiber optic member 10 therealong.

In the case of rods 25, during the crimping action, central parts of sections 29 are first moved into engagement with fiber optic member 10 causing the central parts of sections 29 to be deformed because the material of rods 25 is softer than the fiber optic member, and then the central parts of sections 29 engage each other in the last stage of the crimping operation causing deformation thereof. Very minimal deformation of the fiber optic member takes place when the central parts of sections 29 are crimped onto the fiber optic member 10 thereby causing no appreciable degradation of the light-transmitting characteristics of the fiber optic member. This also results in an effective mechanical termination of the fiber optic member. Sections 29 in their final crimped configurations are slightly arcuate shaped as shown in Figure 8.

In the case of rods 25A as shown in Figure 10, they are crimped onto fiber optic member 10 in the same manner as sections 29 of rods 25 except that the entire lengths of rods 25A with the exception of the tapered ends are crimped into engagement with the fiber optic member thereby mechanically securing the fiber optic member in position in the connector.

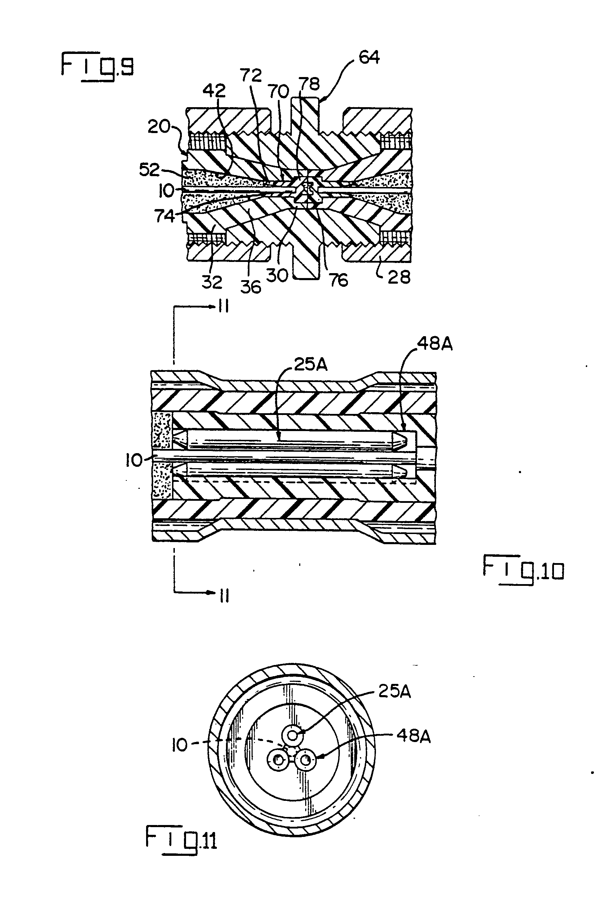

Upon conclusion of crimping connector C into fiber optic cable FOC with an end of fiber optic member 10 extending outwardly from the end of section 30 as shown in Figure 2, a scribing tool 54 is used as shown in Figure 3 to scribe the fiber optic member along the end of section 30, if it is glass, and then the end of the fiber optic member is broken free of the fiber optic member. If the fiber optic member 10 is plastic, it will be cleaved by a suitable cleaving tool.

A compression and polishing fixture 56, as shown in Figure 4, is threadably secured onto connector C with sections 30 and 36 mated within a profiled bore 58 of fixture 56; bore 58 has the same configurations as that of sections 30 and 36 except that they are dimensioned to compress section 30 into tight engagement with the fiber optic member 10 in bore 40 and a slight part of section 30 extends beyond the outer surface of fixture 56 when fixture 56 is threaded onto connector C. Buttons 60 extend outwardly from the outer surface of fixture 56.

Connector C with fixture 56 thereon is now subjected to a polishing action by moving fixture 56 in a figure 8 configuration along a polishing film 62 of very fine silicon carbide or aluminum oxide grit as shown in Figure 5 for a period of time. Buttons 60 stabilize the polishing and when they are worn away, the end of section 30 along with the end of fiber optic member 10 are polished and are in the same plane. Fixture 56 is removed from connector C and connector C is now properly and completely terminated on fiber optic cable FOC.

After ends of the fiber optic cable have been terminated by connectors C, the connectors can be secured onto a coupling bushing 64 as shown in Figure 6. The bore of coupling bushing 64 has identical conical bores 66 leading to a central cylindrical bore 68. When threaded nuts 28 of connectors C threadably engage coupling bushing 64, bores 66 engage conical sections 36 of ferrule members 20 to radially compress these sections of the ferrule members 20 thereby causing resilient radial deformation thereof which biases the fiber optic member to a stable position within central cylindrical bore 60 which will align fiber optic members 10 therein. The radial compression of two similar resilient ferrule members within a commonly shaped bore 60 will bias corresponding light-transmitting members or cores 10 into coincident alignment even though the cladding layers over the light transmission members or cores are of different diameters. Connector C of a terminated fiber optic cable can also be connected with a light-transmitting or light-sensing member in the manner disclosed in U.S. Patent No. 4,186,996.

An alternative embodiment is shown in Figure 9 wherein a lens member 70 is secured in sections 30 and 36 of ferrule member 20. Section 72 of lens member 70 has a conical bore 74 in communication with bore 42 and terminating adjacent lens section 76 which is surrounded by an annular section 78. Fiber optic member has to be trimmed to proper length to abut against the end of bore 74 which also guides the end of the fiber optic member into lens member 70. No removing of an exposed end of the fiber optic member and of polishing the end of the connector as shown in Figure 3 through 5 is necessary when the connector of Figure 9 is used. Lens member 70 will collimate the light transmitting along the fiber optic member 10 and annular sections 78 will engage when the connectors are coupled in coupling bushing 64. Resin 52 will protect the exposed fiber optic member as hereinabove set forth.

## Claims

1. A connector for terminating a fiber optic member (10) of a fiber optic cable (FOC) of the type comprising a ferrule member (20) having a front portion (30, 36) and a rear portion (34), said front and rear portions having a profiled bore (38, 40, 42) extending therethrough, an insert (24) having a profiled bore (48) for extension therethrough of the fiber optic member (10) said insert being disposed within the profiled bore (38) of the rear portion (34) of ferrule member (20), and a crimping ferrule (26) disposed along the rear section (34) of ferrule member (20), characterized in that said insert (24) has a cylindrical portion (46) and said profiled bore (48) is in the form of a rod-receiving bore through said cylindrical portion (46); that at least three discrete rod members (25) of circular cross-section are disposed in said rod-receiving bore (48) and are relatively positioned and held therein to enable fiber optic member (10) to be inserted therealong with an end of the fiber optic member (10) being positioned in said bore (40) adjacent a front surface of said front portion (30, 36) of said ferrule member (20); and that said crimping ferrule (26) is arranged and adapted to be controllably crimped onto said rear section (34) of ferrule member (20) thereby inwardly to deform said rear section (3) and said insert (24) and move the rod members (25) into engagement with the fiber optic member (10).

2. A connector as set forth in claim 1 characterized in that the material of said rod members (25) is softer than the fiber optic member (10) and at least central portions of said rod members (25) are deformed in cross-section during said crimping thereof around said fiber optic member (10) therebetween and are further deformed in cross-section where said rod members engage each other.

3. A connector as set forth in claim 1 or claim 2 characterized in that the rod members (25) are press fitted into and frictionally held by said rod-receiving bore (48) prior to insertion of said fiber ·optic member (10) and crimping of said rod members (25) thereonto.

4. A connector as set forth in claim 1 characterized in that the fiber optic cable (FOC) has strength members (14) and an outer jacket (16), and that a metal ring (22) is positioned over said outer jacket (16) and over which said strength members (14) are positioned, said crimping ferrule (26) extending over said metal ring (22) and being controllably crimpable onto said metal ring (22) in the area of said strength members (14) to secure the strength members (14) between the crimping ferrule (26) and the metal ring (22) to provide strain relief between said connector and said fiber optic member.

5. A connector as set forth in claim 1 characterized in that the end surface of said fiber optic member (10) is in the same plane as the front surface of said ferrule member (20) which also comprises a central cylindrical portion (32), and a conical portion (36) extending between said front (30) and central (32) cylindrical portions, and a protective viscous material (52) is located in said profiled bore (42) of said ferrule member (20) to protect the exposed end of the fiber optic member (10).

6. A connector as set forth in claim 1 characterized in that said rod-receiving bore (48) has a trifoliate configuration and said rod members (25) are dumb-bell shaped.

7. A connector as set forth in claim 1 characterized in that said rod-receiving bore (48) has a trifoliate configuration and said rod members (25) are of uniform circular section and are held in position in laterally spaced apart relation prior to crimping.

8. A connector as set forth in claim 1 characterized in that a lens member (70) is secured in said ferrule member (20) with the end of the fiber optic member (10) disposed therein.

9. A method of terminating a connector onto an end of fiber optic cable characterized by the steps of placing and isert member (24) having discrete rod members (25) therein onto a fiber optic member (10) of the fiber optic cable (FOC) adjacent the end of the fiber optic member (10) with the end of the fiber optic member (10) extending outwardly therefrom; inserting said insert member (24) with the fiber optic member (10) therein into a bore (48) of a ferrule member said insert member being disposed in a rear portion (34) of the ferrule member and (20) with the end of the fiber optic member (10) disposed in a front portion (40) of said bore (48); and controllably crimping a crimping ferrule (26) on said rear portion (34) of said ferrule member (20) thereby reducing said rear portion (34) and and insert member (24) and moving the rod members (25) of said insert member (24) into engagement with the fiber optic member (10) which secures the fiber optic member (10) in said insert member (24) and secures said insert member (24) in said ferrule member (20).

10. A method as set forth in claim 9 characterized by the further step of press fitting said rod members (25) into said insert members (24) to be frictionally held therein, prior to said placing step.

11. A method as set forth in claim 9 characterized by the further step of scribing and breaking or cleaving the end of the fiber optic member (10) extending out from a front surface of said ferrule member (20) at said front section, and the further steps of placing a front end of ferrule member (20) in a fixture (56) with a slight section of said front surface extending beyond an outer surface of said fixture (56); and moving said fixture (56) along a polishing film (62) thereby polishing the end of the fiber optic member (10).

12. A method as set forth in claim 9 characterized by the further step of positioning a ring member (22) over an outer jacket (16) of the fiber optic cable (FOC) with strength members (14) of the fiber optic cable (FOC) being positioned over the ring member (22) and controllably crimping said crimping ferrule (26) onto the strength members (14) and said ring member (22) thereby securing said crimping ferrule (26) onto said ring member (22) with the strength members (14) therebetween.

**Patentansprüche**

1. Verbinder zum Abschließen eines Faseroptik-Elementes (10) eines Faseroptik-Kabels (FOC) von der Art, die folgende Bestandteile umfaßt: ein Hülsenelement (20), das einen vorderen Teil (30, 36) und einen hinteren Teil (34) besitzt, wobei die vorderen und hinteren Teile eine propfilierte Bohrung (38, 40, 42) aufweisen, die sich durch sie hindurch erstreckt, einen Einsatz (24), der eine profilierte Bohrung (48) besitzt, damit sich das Faseroptik-Element (10) durch ihn hindurch erstrecken kann, wobei der Einsatz innerhalb der profilierten Bohrung (38) des hinteren Teils (34) des Hülsenelementes (20) angeordnet ist, und eine Aufquetschhülse (26), die längs des hinteren Abschnittes (34) des Hülsenelements (20) angeordnet ist, dadurch gekennzeichnet, daß der Einsatz (24) einen zylindrischen Teil (46) aufweist und daß die profilierte Bohrung (48) die Form einer stabaufnehmenden Bohrung durch den zylindrischen Teil (46) hindurch besitzt, daß wenigstens drei einzelne Stabelemente (25) mit kreisförmigem Querschnitt in der stabaufnehmenden Bohrung (48) angeordnet und in ihr relativ so positioniert und gehalten sind, daß das Faseroptik-Element (10) längs dieser Bohrung eingeführt werden kann, wobei ein Ende des Faseroptik-Elementes (10) in der Bohrung (40) in der Nähe einer vorderen Oberfläche des vorderen Teils (30, 36) des Hülsenelements (20) angeordnet ist, und daß die Aufquetschhülse (26) so angeordnet und ausgebildet ist, daß sie in kontrollierter Weise auf den hinteren Abschnitt (34) des Hülsenelements (20) aufgequetscht werden kann, wodurch der hintere Abschnitt (34) und der Einsatz (24) nach innen verformt und die Stabelemente (25) in Eingriff mit dem Faseroptik-Element (10) bewegt werden.

2. Verbinder nach Anspruch 1, dadurch gekennzeichnet, daß das Material der Stabelemente (25) weicher ist als das Faseroptik-Element (10) und daß zumindest zentrale Teile der Stabelemente (25) während ihres Aufquetschens um das zwischen ihnen befindliche Faseroptik-Element (10) in ihrem Querschnitt verformt werden und daß sie weiter in ihrem Querschnitt verformt werden, wenn diese Stab-elemente miteinander in Eingriff treten.

3. Verbinder nach Anspruch 1 oder 2, dadurch gekennzeichnet, daß die Stabelemente (25) vor dem Einführen des Faseroptik-Elementes (10) und dem Aufquetschen der Stabelemente (25) auf das Faseroptik-Element im Preßsitz in die stabaufnehmende Bohrung (48) eingepaßt und in dieser durch Reibeingriff gehalten sind.

4. Verbinder nach Anspruch 1, dadurch gekennzeichnet, daß das Faseroptik-Kabel (FOC) Verstärkungselemente (14) und eine äußere Umhüllung (16) aufweist, und daß ein Metallring (22) über der äußeren Umhüllung (16) angeordnet ist, über den die Verstärkungselemente (14) angeordnet werden, wobei sich die Aufquetschhülse (26) über den Metallring (22) erstreckt und in kontrollierbarer Weise auf den Metallring (22) im Bereich der Verstärkungselemente (14) aufquetschbar ist, um die Verstärkungselemente (14) zwischen der Aufquetschhülse (26) und dem Metallring (22) zu befestigen, um eine Zugentlastung zwischen dem Verbinder und dem Faseroptik-Element zu schaffen.

5. Verbinder nach Anspruch 1, dadurch gekennzeichnet, daß sich die Endoberfläche des Faseroptik-Elements (10) in derselben Ebene befindet wie die vordere Oberfläche des Hülsenelements (20), das auch einen zentralen zylindrischen Teil (32) und einen konischen Teil (36) umfaßt, der sich zwischen dem vorderen zylindrischen Teil (30) und dem zentralen zylindrischen Teil (32) erstreckt, und daß ein schützendes viskoses Material (52) in der profilierten Bohrung (42) des Hülsenelements (20) angeordnet ist, um das freigelegte Ende des Faseroptik-Elementes (10) zu schützen.

6. Verbinder nach Anspruch 1, dadurch gekennzeichnet, daß die stabaufnehmende Bohrung (48) eine dreiblättrige Konfiguration aufweist und daß die Stabelemente (25) hantelförmig ausgebildet sind.

7. Verbinder nach Anspruch 1, dadurch gekennzeichnet, daß die stabaufnehmende Bohrung (48) eine dreiblättrige Konfiguration besitzt und daß die Stabelemente (25) einen gleichförmigen Kreisquerschnitt besitzen und vor dem Aufquetschen in einer Position gehalten werden, in der sie seitlich voneinander beabstandet sind.

8. Verbinder nach Anspruch 1, dadurch gekennzeichnet, daß ein Linsenelement (70) in dem Hülsenelement (20) befestigt ist, wobei das Ende des Faseroptik-Elementes (10) in dem Linsenelement angeordnet ist.

9. Verfahren zum abschließenden Befestigen eines Verbinders an dem Ende eines Faseroptik-Kabels gekennzeichnet durch folgende Schritte: Anordnen eines Einsatzelementes (24), in dem sich einzelne Stabelemente (25) befinden, auf einem Faseroptik-Element (10) des Faseroptik-Kabels (FOC) in der Nähe des Endes des Faseroptik-Elementes (10) wobei sich das Ende des Faseroptik-Elementes (10) aus dem Einsatzelement heraus nach außen erstreckt, Einführen des Einsatzelements (24) mit dem in ihm befindlichen Faseroptik-Element (10) in eine Bohrung (48) eines Hülsenelementes, wobei das Einsatzelement in einem hinteren Teil (34) des Hülsenelementes (20) und das Ende des Faseroptik-Elementes (10) in einem vorderen Teil (40) der Bohrung (48) angeordnet ist, und kontrolliertes Aufquetschen einer Aufquetschhülse (26) auf den hinteren Teil (34) des Hülsenelements (20), wodurch der hintere Teil (34) und das Einsatzelement (24) zusammengedrückt und die Stabelemente (25) des Einsatzelementes (24) in Eingriff mit dem Faseroptik-Element (10) bewegt werden, wodurch das Faseroptik-Element (10) in dem Einsatzelement (24) und das Einsatzelement (24) im Hülsenelement (20) befestigt werden.

10. Verfahren nach Anspruch 9, gekennzeichnet durch den weiteren Schritt des Einpassens im Preßsitz der Stabelemente (25) in das Einsatzelement (24) vor dem Anordnen des Einsatzelementes auf dem Faseroptik-Element, so daß die Stabelemente in dem Einsatzelement durch Reibung gehalten werden.

11. Verfahren nach Anspruch 9, gekennzeichnet durch den weiteren Schritt des Einritzens und Abbrechens oder Abtrennens des Endes des Faseroptik-Elementes (10), das aus einer vorderen Oberfläche des Hülsenelements (20) an dem vorderen Abschnitt herausragt, und den weiteren Schritt des Anordnens des vorderen Endes des Hülsenelements (20) in einer Halterung (56), so daß sich ein kleiner Abschnitt der vorderen Oberfläche über eine äußere Oberfläche der Halterung (56) hinauserstreckt und Bewegen dieser Halterung (56) längs eines Polier-Films (62), wodurch das Ende des Faseroptik-Elementes (10) poliert wird.

12. Verfahren nach Anspruch 9, gekennzeichnet durch den weiteren Schritt des Anordnens eines Ringelementes (22) über einer äußeren Umhüllung (16) des Faseroptik-Kabels (FOC), wobei Verstärkungselemente (14) des Faseroptik-Kabels (FOC) über dem Ringelement (22) positioniert werden, und des kontrollierten Aufquetschens der Aufquetschhülse (26) auf die Verstärkungselemente (14) und das Ringelement (22), wodurch die Quetschhülse (26) auf dem Ringelement (22) so befestigt wird, daß sich zwischen ihnen die Verstärkungselemente (14) befinden.

## Revendications

1. Connecteur pour la terminaison d'un élément à fibre optique (10) d'un câble à fibre optique (FOC) du type comprenant un élément à virole (20) comportant une partie avant (30, 36) et une partie arrière (34), lesdites parties avant et arrière étant parcourues par un alésage profilé (38, 40, 42), un élément rapporté (24) présentant un alésage profilé (48) destiné à être parcouru par l'élément à fibre optique (10), ledit élément apporté étant disposé à l'intérieur de l'alésage profilé (38) de la partie arrière (34) de l'élément à virole (20), et une virole à sertir (26) étant disposée le long de la section arrière (34) de l'élément à virole (20), caractérisé en ce que ledit élément rapporté (24) comporte une partie cylindrique (46) et ledit alésage profilé (48) se présente sous la forme d'un alésage de réception de tiges traversant ladite partie cylindrique (46); en ce qu'au moins trois éléments de tiges physiquement distincts (25), de section transversale circulaire, sont disposés dans ledit alésage (48) de réception de tiges et sont positionnés et maintenus les uns par rapport aux autres, dans cet alésage, pour permettre à l'éléments, à fibre optique (10) d'être inséré le long de ces élément, une extrémité de l'élément à fibre optique (10) étant positionnée dans ledit alésage (40) à proximité immédiate d'une surface avant de ladite partie avant (30, 36) dudit élément à virole (20); et en ce que ladite virole à sertir (26) est agencée et conçue pour être sertie de façon déterminée sur ladite section arrière (34) de l'élément à virole (20) afin de déformer vers l'intérieur ladite section arrière (34) et ledit élément rapporté (24) et d'amener les éléments de tiges (25) en contact avec l'élément à fibre optique (10).

2. Connecteur selon la revendication 1, caractérisé en ce que la matière desdits éléments de tiges (25) es plus tendre que celle de l'élément à fibre optique (10) et en ce qu'au moins des parties centrales desdits éléments de tiges (25) sont déformées, en section transversale, pendant ledit sertissage de ces éléments autour dudit élément à fibre optique (10) passant entre eux, et sont encore déformées, en section transversale, où lesdits éléments de tiges portent les uns contre les autres.

3. Connecteur selon la revendication 1 ou la revendication 2, caractérisé en ce que les éléments de tiges (25) sont emmanchés à force et maintenus par frottement dans ledit alésage (48) de réception de tiges avant l'insertion dudit élément à fibre optique (10) et le sertissage desdits éléments de tiges (25) sur cet élément à fibre optique.

4. Connecteur selon la revendication 1, caractérisé en ce que le câble à fibre optique (FOC) comporte des éléments de renfort (14) et une gaine extérieure (16), et en ce qu'un anneau métallique (22) est positionné dur ladite gaine extérieure (16), lesdits éléments de renfort (14) étant positionnés sur cet anneau métallique, ladite virole à sertir (26) s'étendant au-dessus dudit anneau métallique (22) et pouvant être sertie de manière déterminée sur ledit anneau métallique (22) dans la zone desdits éléments de renfort (14) pour fixer les éléments de renfort (14) entre la virole à sertir (26) et l'anneau métallique (22) afin d'établir un soulagement de contrainte entre ledit connecteur et ledit élément à fibre optique.

5. Connecteur selon la revendication 1, caractérisé en ce que la surface extrême dudit élément à fibre optique (10) est dans le même plan que la surface avant dudit élément à virole (20) qui comprend également une partie cylindrique centrale (32) et une partie conique (36) s'étendant entre lesdits parties cylindriques avant (30) et centrale (32), et une matière visqueuse (52) de protection est placée dans ledit alésage profilé (42) dudit élément à virole (20) pour protéger l'extrémité à découvert de l'élément à fibre optique (10).

6. Connecteur selon la revendication 1, caractérisé en ce que ledit alésage (48) de réception de tiges présente une configuration en trèfle et lesdits éléments de tiges (25) sont en forme d'haltères.

7. Connecteur selon la revendication 1, caractérisé en ce que ledit alésage (48) de réception de tiges présente une configuration en trèfle et lesdits éléments de tiges (25) sont d'une section circulaire uniforme et sont maintenus en position, écartés latéralement les uns des autres, avant le sertissage.

8. Connecteur selon la revendication 1, caractérisé en ce qu'un élément à lentille (70) est fixé dans ledit élément à virole (20) à l'intérieur duquel est disposée l'extrémité de l'élément à fibre optique (10).

9. Procédé pour la terminaison d'un connecteur sur une extrémité d'un câble à fibre optique, caractérisé par les étapes qui consistent à placer un élément rapporté (24), renfermant des éléments de tiges physiquement distincts (25), sur un élément à fibre optique (10) du câble à fibre optique (FOC) à proximité immédiate le l'extrémité de l'élément à fibre optique (10), l'extrémité de l'élément à fibre optique (10) en partant vers l'extérieur; à insérer ledit élément rapporté (24), renfermant l'élément à fibre optique (10), dans un alésage (48) d'un élément à virole, ledit élément rapporté étant disposé dans une partie arrière (34) de l'élément à virole (20) et l'extrémité de l'élément à fibre optique (10) étant disposé dans une partie avant (40) dudit alésage (48), et à sertir de manière déterminée une virole à sertir (26) sur ladite partie arrière (34) dudit élément à virole (20) afin de réduire ladite partie arrière (34) et ledit élément rapporté (24) et d'amener les éléments de tiges (25) dudit élément rapporté (24) en contact avec l'élément à fibre optique (10) ce qui fixe l'élément à fibre optique (10) dans ledit élément rapporté (24) et fixe ledit élément rapporté (24) dand ledit élément à virole (20).

10. Procédé selon la revendication 9, caractérisé en ce qu'il consiste en outre à emmancher à force lesdits éléments de tiges (25) dans ledit élément rapporté (24) afin qu'ils y soient retenus par frottement, avant ladite étape de mise en place.

11. Procédé selon la revendication 9, caractérisé en ce qu'il consiste en outre à tracer et casser ou tailler l'extrémité de l'élément à fibre optique (10) sortant d'une surface avant dudit élément à virole (20), à ladite section avant, et à placer une extrémité avant de l'élément à virole (20) dans un montage (56), une petite section de ladite surface avant s'étendant au-delà d'une surface extérieure dudit montage (56); et à dèplacer ledit montage (56) le long d'une feuille à polir (62) afin de polir l'extrémité de l'élément à fibre optique (10).

12. Procédé selon la revendication 9, caractérisé en ce qu'il consiste en outre à positionner un élément annulaire (22) sur une gaine extérieure (16) du câble à fibre optique (FOC), des éléments de renfort (14) du câble à fibre optique (FOC) étant positionnés sur l'élément annulaire (22), et à sertir de manière déterminée ladite virole à sertir (26) sur les éléments de renfort (14) et ledit élément annulaire (22), afin de fixer ladite virole à sertir (26) sur ledit élément annulaire (22), les éléments de renfort (14) étant entre eux.

Fig.1

Fig.2

Fig.3

Fig.4

Fig.5

Fig.6

Fig.7

Fig.8

Fig.9

Fig.10

Fig.11